# EUROPÄISCHE PATENTANMELDUNG

(11) **EP 1 801 945 A1**
(43) Veröffentlichungstag der Anmeldung: **27.06.2007**
(21) Anmeldenummer: 06125305.0
(22) Anmeldetag: 04.12.2006
(51) Int. Cl.: H02G 3/22, H02G 1/00, B28D 1/04, B23D 51/08

(54) **Leitungsdurchführung in einem Bauteil**

(30) Priorität: 21.12.2005 DE 102005000197
(71) Anmelder: HILTI Aktiengesellschaft, 9494 Schaan (LI)
(72) Erfinder: Münzenberger, Herbert, 65191, Wiesbaden (DE); Klein, Manfred, 86916, Kaufering (DE)
(74) Vertreter: Wildi, Roland

(57) **Zusammenfassung**

Die Erfindung betrifft eine Leitungsdurchführung (10) in einem Bauteil (30), mit einem das Bauteil (30) durchsetzenden Hüllrohr (11). Das Hüllrohr (11) weist dabei Kopplungsmittel (15) für einen Drehantrieb und an einem Stirnende (12) ein Schneidprofil (14) auf, wobei das Schneidprofil über ein Kantenschutzmittel (16) abgedeckt ist

## Beschreibung

Die Erfindung betrifft eine Leitungsdurchführung in einem Bauteil, der im Oberbegriff von Patentanspruch 1 genannten Art. Derartige Leitungsdurchführungen dienen dem Durchführen von Leitungen, wie z. B. Rohrleitungen oder Kabelkanälen, durch das Bauteil, wie z. B. durch Decken oder Wände.

Bei Leitungsdurchführungen wird in einen in einem Bauteil vorhandenen Durchbruch ein Hüll- oder Futterrohr eingebracht, welches den Durchbruch verschalt. Durch dieses Hüllrohr kann dann die Leitung hindurchgeführt und gegenüber dem Hüllrohr abgedichtet werden.

Aus der DE 103 13 305 A1 ist ein derartiges Futterrohr für Leitungsdurchführungen bekannt, das ein im Wesentlichen zylindrisches Basisrohr, welches mit mehreren umlaufenden Lamellen versehen ist, und an beiden Endbereichen jeweils Rohrabschnitte grösseren Durchmessers aufweist.

Von Nachteil bei diesem Futterrohr ist, dass vor dem Einbau des Futterrohres zunächst ein Durchbruch mittels einer Säge erzeugt werden muss.

Der vorliegenden Erfindung liegt die Aufgabe zugrunde, eine Anordnung einer Leitungsdurchführung in einem Bauteil bereitzustellen, die schnell montierbar ist.

Erfindungsgemäss wird die Aufgabe dadurch gelöst, dass die Leitungsdurchführung ein Hüllrohr aufweist, das ein Kopplungsmittel für einen Drehantrieb aufweist und das an einem Stirnende ein Schneidprofil aufweist, wobei das Schneidprofil über ein Kantenschutzmittel abgedeckt ist. Die erfindungsgemässe Leitungsdurchführung ist in einem Arbeitsgang erstellbar, indem der Durchbruch direkt mit dem Hüllrohr erzeugt wird. Das Schneidprofil wird dabei nach dem Schneidevorgang mittels des Kantenschutzmittels abgedeckt um Beschädigungen der durch das Hüllrohr hindurchgeführten Leitungen zu vermeiden.

Es ist ferner vorteilhaft, wenn die Kopplungsmittel an einem dem Stirnende abgewandten Rohrende angeordnet sind. Ferner ist es vorteilhaft, wenn die Kopplungsmittel über ein weiteres Kantenschutzmittel abgedeckt sind. Hierdurch wird eine Beschädigung der durch das Hüllrohr hindurchgeführten Leitungen durch die Kopplungsmittel vermieden. Die Kopplungsmittel können dabei z. B. durch taschenförmige Ausnehmungen gebildet sein, die mit Zapfen eines Drehantriebes in Eingriff gebracht werden können.

Günstig ist es auch, wenn die Kantenschutzmittel als Kunststoffringe ausgebildet sind, die jeweils eine ringförmige Nut zur Aufnahme eines Rohrendes aufweisen. Derartige Kunststoffringe sind zu geringen Stückkosten herstellbar und können während des Transportes und der Lagerung eines Hüllrohres für die Leitungsdurchführung auf das Stirnende mit dem Sägeprofil und/oder auf das Rohrende mit den Kopplungsmitteln aufgesteckt sein. Hierdurch werden zum einen die Rohrenden geschützt und zum anderen stehen die Kantenschutzmittel nach der Montage des Hüllrohres direkt wieder zur Verfügung.

Weitere Vorteile und Massnahmen der Erfindung ergeben sich aus den Unteransprüchen, der nachfolgenden Beschreibung und den Zeichnungen. In den Zeichnungen ist die Erfindung in einem Ausführungsbeispiel dargestellt.

Es zeigen:
- Fig. 1: eine Leitungsdurchführung mit einem Hüllrohr in einer Wand während der Montage,
- Fig. 2: die Leitungsdurchführung aus Fig. 1 im montierten Zustand,
- Fig. 3: ein Hüllrohr einer Leitungsdurchführung an einem Drehantriebsadapter,
- Fig. 4: ein Kantenschutzmittel der Leitungsdurchführung aus Fig. 2.

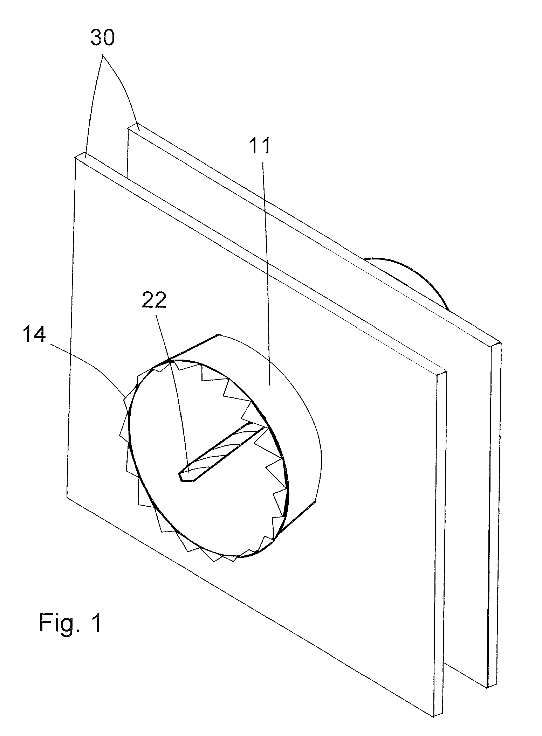

Eine aus den Fig. 1 bis 2 ersichtliche und in einem Bauteil 30, wie z. B. einer zweischaligen Leichtbauwand, angeordnete Leitungsdurchführung 10 beinhaltet ein zylindrisches Hüllrohr 11 an dessen Stirnende 12 ein Schneidprofil 14 mit einer Vielzahl von einzelnen Sägezähnen angeordnet ist (vgl. Fig. 1). Die Sägezähne sind dabei einteilig mit dem Hüllrohr ausgebildet. Alternativ könnte das Schneidprofil 14 anstelle von Sägezähnen auch andere Schneidkörper aufweisen.

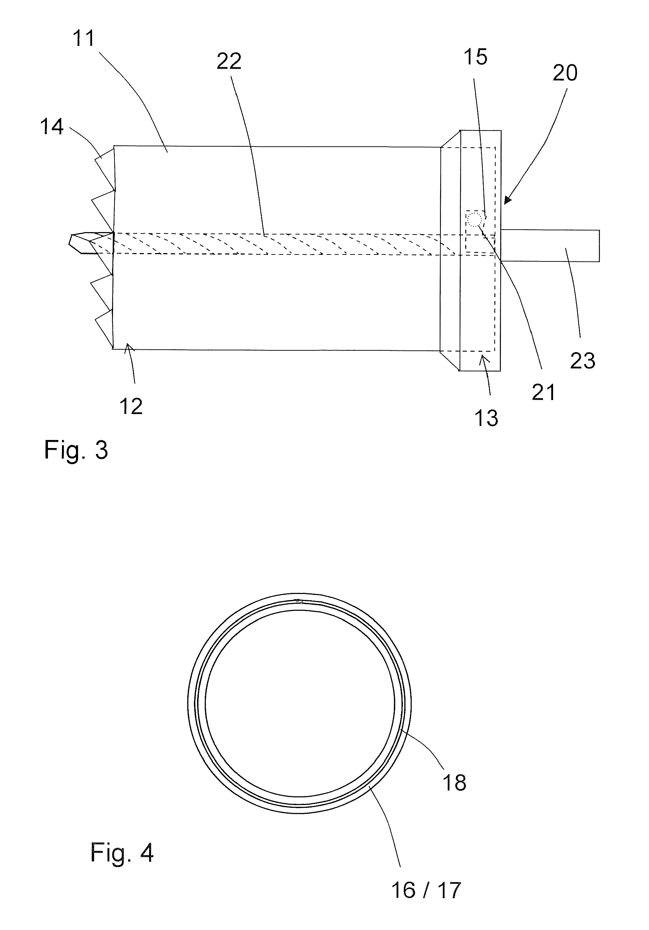

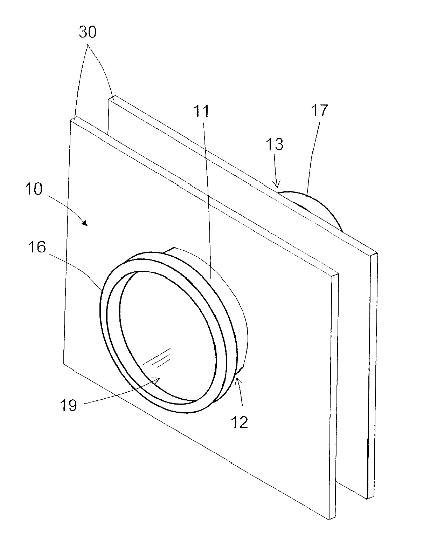

Wie aus Fig. 3 ersichtlich ist, weist das Hüllrohr 11 neben dem Schneidprofil 14 an einem dem Stirnende 12 entgegengesetzten Rohrende 13 Kopplungsmittel 15 auf. Diese Kopplungsmittel 15 sind als taschenförmige Ausnehmungen ausgebildet, von denen z. B. 2 bis 4 vorgesehen sind. Über diese Kopplungsmittel 15 kann das Hüllrohr 11 mit einem Drehantrieb gekoppelt werden, was hier mittels eines Drehantriebsadapters 20 erfolgt, der dazu eine entsprechende Anzahl an Gegenkopplungsmitteln 21 aufweist, die z. B. als Zapfen ausgebildet sind. Der Drehantriebsadapter 20 weist ferner ein axial angeordnetes Einsteckende 23 auf, über welches er mit dem Drehantrieb (in den Figuren nicht dargestellt), wie z. B. einer Bohrmaschine, koppelbar ist. Ein axial am Drehantriebsadapter 20 angeordneter Bohrer 22 sorgt bei einem Bohrvorgang für eine Zentrierung des Hüllrohres 11.

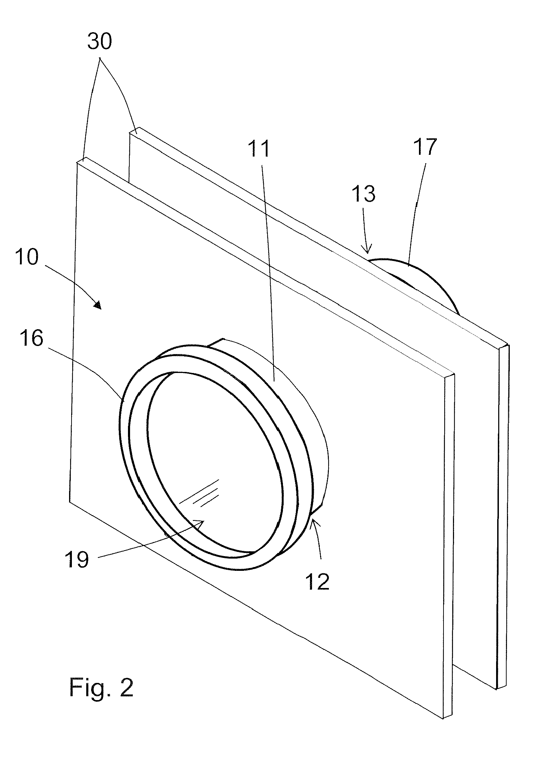

In Fig. 1 wurde das Hüllrohr 11 mit dem an einen Drehantrieb gekoppelten Drehantriebsadapter 20 in das Bauteil 30 eingebracht. Nach dem Eindrehen in das Bauteil 30 wurde der Drehantriebsadapter 20 mit dem Bohrer 22 durch Entkoppeln der Gegenkopplungsmittel 21 von den Kopplungsmitteln 15 des Hüllrohres 11 von diesem entfernt. Im Anschluss daran wurde das Stirnende 12 und das Rohrende 13 jeweils mit einem Kantenschutzmittel 16, 17 versehen um die Leitungsdurchführung 10 in dem Bauteil 30 zu komplettieren (vgl. Fig. 2). Die Kantenschutzmittel 16, 17 sind dabei als Kunststoffringe ausgebildet, von denen einer beispielhaft in Fig. 4 in Aufsicht dargestellt ist. Dieser Kunststoffring 16, 17 weist eine umlaufende, ringförmige Nut 18 auf, die das Rohrende bzw. Stirnende 12 mit dem Schneidprofil 14 oder das Rohrende 13 mit den Kopplungsmitteln 15 aufnehmen kann.

Die aus Fig. 2 ersichtliche Leitungsdurchführung 10 weist einen zylindrischen Innenraum 19 auf, der das Bauteil 30 durchsetzt und durch den in den Figuren nicht dargestellte Leitungen hindurchgeführt werden können.

## Patentansprüche

1. Leitungsdurchführung (10) in einem Bauteil (30), mit einem das Bauteil (30) durchsetzenden Hüllrohr (11),
**dadurch gekennzeichnet,**
**dass** das Hüllrohr (11) Kopplungsmittel (15) für einen Drehantrieb und an einem Stirnende (12) ein Schneidprofil (14) aufweist, wobei das Schneidprofil (14) über ein Kantenschutzmittel (16) abgedeckt ist.

2. Leitungsdurchführung nach Anspruch 1, **dadurch gekennzeichnet, dass** die Kopplungsmittel (15) an einem dem Stirnende (12) abgewandten Rohrende (13) angeordnet sind.

3. Leitungsdurchführung nach Anspruch 1, **dadurch gekennzeichnet, dass** die Kopplungsmittel (15) über ein weiteres Kantenschutzmittel (17) abgedeckt sind.

4. Leitungsdurchführung nach Anspruch 1 oder 2, **dadurch gekennzeichnet, dass** das Kantenschutzmittel (16) und das weitere Kantenschutzmittel (17) als Kunststoffringe ausgebildet sind, die jeweils eine ringförmige Nut (18) zur Aufnahme eines Stirn- oder Rohrendes (12, 13) aufweist.
